# EUROPEAN PATENT SPECIFICATION

(11) **EP 2 469 807 B1**
(45) Date of publication and mention of the grant of the patent: **07.12.2016**
(21) Application number: 10196722.2
(22) Date of filing: 23.12.2010
(51) Int. Cl.: H04M 1/02, H04N 5/232, H04N 5/345

(54) **Handheld electronic device having sliding display and position configurable camera**
Tragbare elektronische Vorrichtung mit gleitender Anzeige und positionskonfigurierbarer Kamera
Dispositif électronique portable doté d'un écran coulissant et caméra à position configurable

(43) Date of publication of application: 27.06.2012
(73) Proprietor: BlackBerry Limited, Waterloo, ON N2K 0A7 (CA)
(72) Inventor: Griffin, Jason Tyler, Waterloo, Ontario N2L 3W8 (CA); Mahan, Laura, Kanata, Ontario K2K 3K2 (CA)
(74) Representative: Moore, Barry

(56) References cited:
- EP-A1- 2 387 212
- GB-A- 2 384 939
- US-A- 5 900 909
- US-A1- 2010 093 409

## Description

### FIELD OF TECHNOLOGY

The present disclosure relates to electronic devices, including handheld electronic communication devices having a sliding display and a camera.

### BACKGROUND

Electronic devices, including handheld electronic communication devices, have gained widespread use and may provide a variety of functions including, for example, telephonic, electronic text messaging, personal information manager (PIM) application functions, mobile web browsing, and audio and video playback, among other things. Some electronic devices additionally include hardware for capturing images and can capture images in portrait or landscape orientations depending on camera orientation.

UK Patent Application GB 2,384,939 A describes a portable communication device in which the size of a display area can be changed by sliding a first unit relative to a second unit. The portable communication device includes a position detector for detection a position of the first unit relative to the second unit.

United States Patent Application No. 2010/0093409 A1 describes an apparatus including a body, and a display part being attached to the body and configured to slide between a first position and a second position.

United States Patent 5,900,909 describes an electronic still camera with an electronic image sensor and an orientation determination section for sensing the orientation of the camera relative to the subject. The electronic still camera includes orientation sensors which determine whether the user is holding the camera in the normal horizontal landscape orientation when taking a picture, or in a vertical portrait orientation. The image is rotated in the camera and always stored in the same orientation.

### SUMMARY

According to one example is a handheld electronic device as recited in to claim 1.

According to an example embodiment is a method of capturing image data using a handheld electronic device having a movable display screen, as recited in claim 10.

### BRIEF DESCRIPTION OF THE DRAWINGS

Embodiments of the present disclosure will now be described, by way of example only, with reference to the attached Figures, wherein:
FIG. 1 is a simplified block diagram of components including internal components of a handheld electronic communication device according to an example embodiment;
FIG. 2 is a perspective view of an example of a handheld electronic communication device including a display assembly in a retracted position;
FIG. 3 is a perspective view of the handheld electronic communication device of FIG. 2 showing the display assembly in an extended position;
FIG. 4A is a front view of the handheld electronic communication device of FIG. 2 showing the display assembly in the retracted position;
FIG. 4B is a back view of the handheld electronic communication device of FIG. 2 showing the display assembly in the retracted position;
FIG. 4C is a right side view of the handheld electronic communication device of FIG. 2 showing the display assembly in the retracted position;
FIG. 4D is a left side view of the handheld electronic communication device of FIG. 2 showing the display assembly in the retracted position;
FIG. 5A is a front view of the handheld electronic communication device of FIG. 2 showing the display assembly in the extended position;
FIG. 5B is a back view of the handheld electronic communication device of FIG. 2 showing the display assembly in the extended position;
FIG. 5C is a right side view of the handheld electronic communication device of FIG. 2 showing the display assembly in the extended position;
FIG. 5D is a left side view of the handheld electronic communication device of FIG. 2 showing the display assembly in the extended position;
FIG. 6A is a front view of a display assembly of the handheld electronic communication device of FIG. 2;
FIG. 6B is a back view of the display assembly of FIG. 6A;
FIG. 6C is a side view of the display assembly of FIG. 6A;
FIG. 7 is an exploded side view of a housing of the handheld electronic communication device of FIG. 2;
FIG. 8 is a front view of a front housing member of the housing of FIG. 7;
FIG. 9 is a front view of a base of the housing of FIG. 7;
FIG. 10 is a schematic sectional view of the handheld electronic communication device of FIG. 2, taken along lines X-X of FIG 4A;
FIG. 11 is a schematic sectional view of the handheld electronic communication device of FIG. 2, taken along lines XI-XI of FIG 4B;
FIG. 12 is a back view of a further example of a handheld electronic communication device, showing the display assembly in the retracted position;
FIGS. 13A-F are front views of the handheld electronic communication device of FIG. 2 in different orientations and having the display assembly in different positions;
FIG. 14 is a flowchart illustrating an example of a method of capturing image data using a handheld electronic device having a sliding display and an image sensor;
FIG. 15 illustrates an image having a landscape orientation and an image having portrait orientation; and
FIG. 16 illustrates pixels of an image sensor.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the example embodiments described herein. However, it will be understood by those of ordinary skill in the art that the example embodiments described herein may be practiced without these specific details. In other instances, well-known methods, procedures and components have not been described in detail so as not to obscure the example embodiments described herein. Also, the description is not to be considered as limited to the scope of the example embodiments described herein.

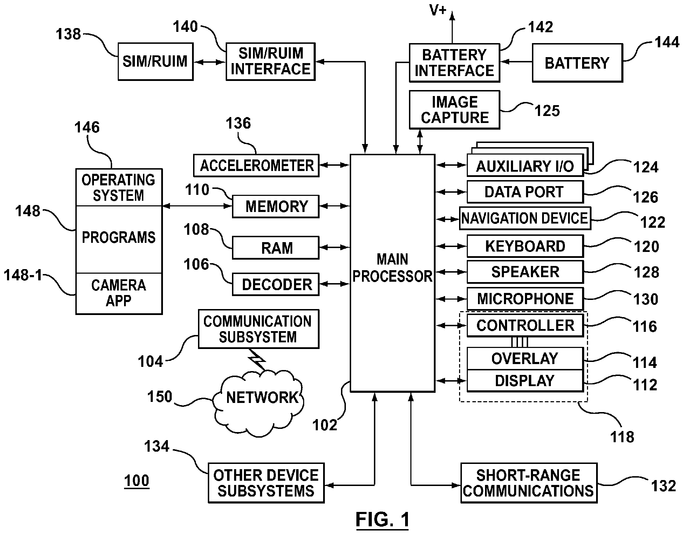

Referring first to FIG. 1, a block diagram of components of the handheld electronic communication device 100 is shown. The handheld electronic communication device 100 includes multiple components such as a processor 102 that controls the operations of the handheld electronic communication device 100. Communication functions, including data and voice communications, are performed through a communication subsystem 104. Data received by the handheld electronic communication device 100 is decompressed and decrypted by a decoder 106. The communication subsystem 104 receives messages from and sends messages to a wireless network 150. The wireless network 150 may be any type of wireless network, including, but not limited to, data-centric wireless networks, voice-centric wireless networks, and dual-mode networks that support both voice and data communications over the same physical base stations. In some examples, wireless network 150 is a conforms to one or more of the following wireless network types: Mobitex Radio Network, DataTAC, GSM (Global System for Mobile Communication), GPRS (General Packet Radio System), TDMA (Time Division Multiple Access), CDMA (Code Division Multiple Access), CDPD (Cellular Digital Packet Data), iDEN (integrated Digital Enhanced Network), EvDO (Evolution-Data Optimized) CDMA2000, EDGE (Enhanced Data rates for GSM Evolution), UMTS (Universal Mobile Telecommunication Systems), HSPDA (High-Speed Downlink Packet Access), IEEE 802.16e (also referred to as Worldwide Interoperability for Microwave Access or "WiMAX), or various other networks. In some examples, wireless network 150 includes a wireless network which, in some embodiments, conforms to IEEE 802.11x standards (sometimes referred to as Wi-Fi) such as, for example, one or more of the IEEE 802.11a, 802.11b, 802.11g and 802.11n standards. Other communication protocols may be used for the network 150 include for example IEEE 802.20 (also referred to as Mobile Wireless Broadband Access). In some examples communication subsystem 104 could include two or more communications subsystems for communicating with two or more different types of wireless networks - for example a wireless wide area network communication subsystem for EDGE or GPRS communications and a wireless local area network communication subsystem for Wi-Fi communications. The handheld electronic communication device 100 is a battery-powered device and includes a battery interface 142 for receiving one or more rechargeable batteries 144.

The processor 102 also interacts with additional subsystems such as a Random Access Memory (RAM) 108, a flash memory 110, a display 112 with a touch-sensitive overlay 114 connected to an electronic controller 116 that together comprise a touch-sensitive display 118, an input device such as keyboard 120, an optional navigation device 122, an auxiliary input/output (I/O) subsystem 124, an image capture device 125, a data port 126, a speaker 128, a microphone 130, short-range communications 132 (which for example could include a Bluetooth™ interface or infrared interface, among other things) and other device subsystems 134. User-interaction with the graphical user interface may be performed through the touch-sensitive overlay 114. The processor 102 interacts with the touch-sensitive overlay 114 via the electronic controller 116. Information, such as text, characters, symbols, images, icons, and other features that may be displayed or rendered on a handheld electronic communication device, are displayed on the touch-sensitive display 118 via the processor 102. Although the touch-sensitive display 118 is described as comprising a display 112 and an overlay 114, the touch-sensing components may overlay the display 112 or, alternatively, may be integrated into the display 112.

The processor 102 may also interact with an orientation sensor such as an accelerometer 136 as shown in FIG. 1. The accelerometer 136 may include a cantilever beam with a proof mass and suitable deflection sensing circuitry. The accelerometer 136 may be utilized for detecting direction of gravitational forces or gravity-induced reaction forces. The orientation sensor may also comprise a tilt sensor, an inclinometer, or any other device capable of sensing the orientation of the device.

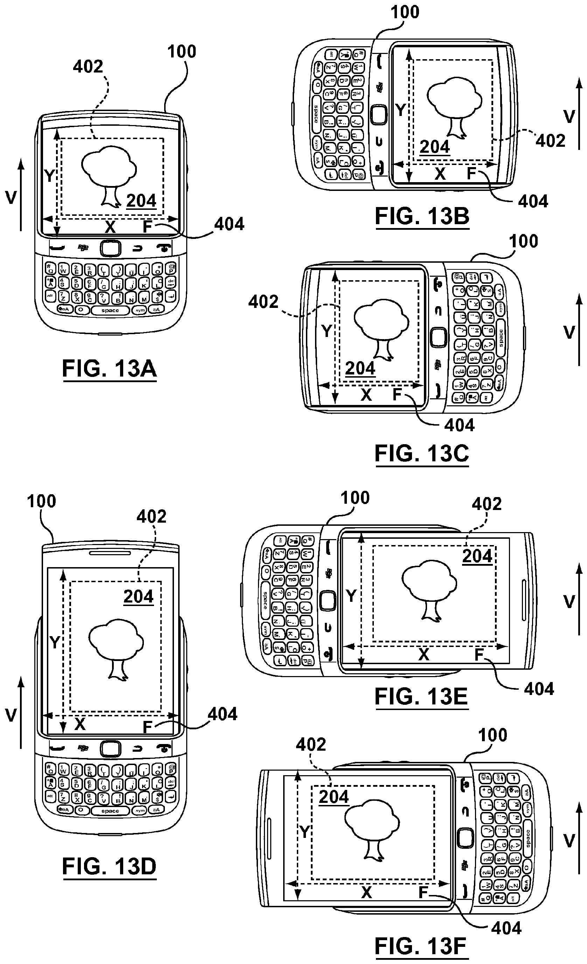

Information from the orientation sensor can be used to detect whether the device is in a vertical orientation as illustrated in Figures 13A and 13D, or in a horizontal orientation as illustrated in Figs. 13B, 13C, 13E and 13F.

To identify a subscriber for network access according to the present embodiment, the handheld electronic communication device 100 uses a Subscriber Identity Module or a Removable User Identity Module (SIM/RUIM) card 138 inserted into a SIM/RUIM interface 140 for communication with a network such as the wireless network 150. Alternatively, user identification information may be programmed into the flash memory 110.

The handheld electronic communication device 100 also includes an operating system 146 and software components 148 that are executed by the processor 102 and are typically stored in a persistent store such as flash memory 110. Additional applications may be loaded onto the handheld electronic communication device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 then processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the handheld electronic communication device 100 is similar. The speaker 128 outputs audible information converted from electrical signals, and the microphone 130 converts audible information into electrical signals for processing.

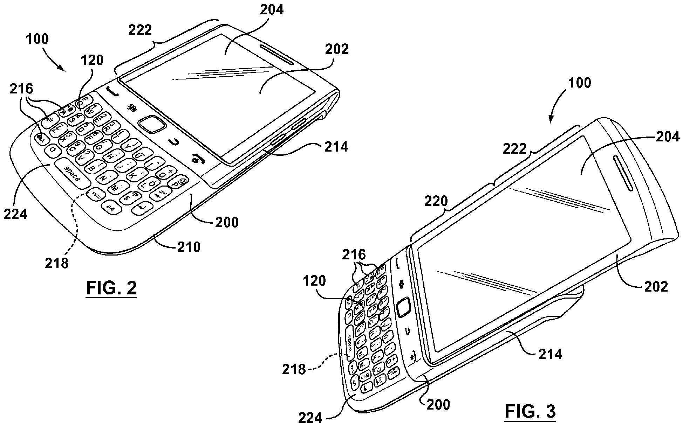

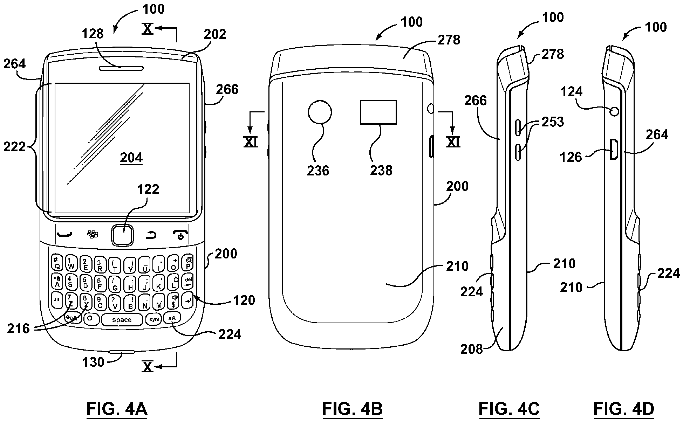

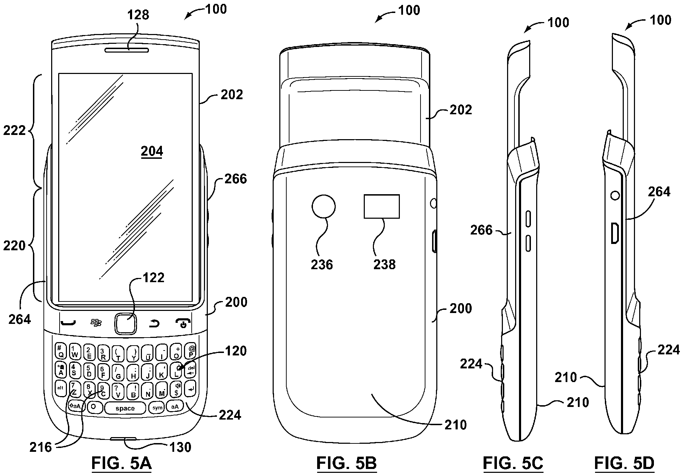

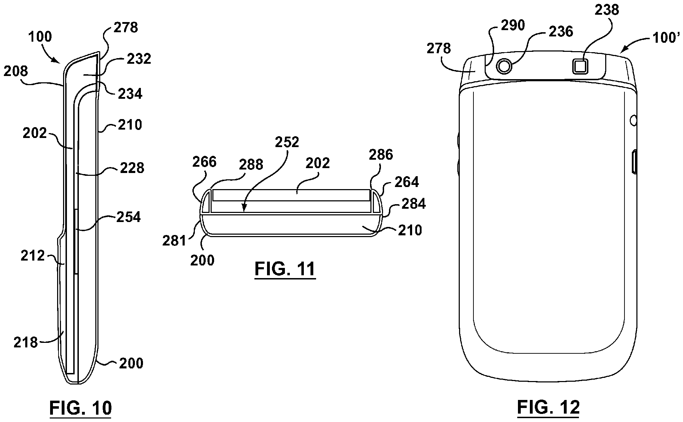

Referring to Figures 2, 3, 4A-4D and 5A-5D views of an example of the handheld electronic communications device 100 are shown. The handheld electronic communication device 100 includes a housing 200 having a longitudinal axis and a sliding display screen assembly 202 that is mounted to the housing to slide axially between a first or retracted position as shown in Figures 2 and 4A-4D and a second or extended position as shown in Figures 3 and 5A-5D. The housing 200 includes a base 210 and a keyboard support member 224 in which a plurality of forward facing user input keys 216 of the keyboard 120 are disposed. A cavity 218, as best seen in sectional view of Figure 10, and indicated by dashed reference line in Figure 2 and 3, is defined between a front surface of the base 210 and a back surface of the keyboard support member 224. The sliding display assembly 202 includes a display screen 204 (which in one example includes display 112 and touch sensitive overlay 114) on its front face. The display screen 204 has a first or lower portion 220 and a second or upper portion 222. When the display assembly 202 is in the retracted position as shown in Figure 2, the lower portion 220 of the display screen 204 is received within the cavity 218 of housing 200 underlying the keyboard support member 224 such that the lower portion 220 is hidden from view, and the upper portion 222 of the display screen 204 extends from an open end of the cavity 218 and is exposed and viewable from a front of the device. When the display assembly 202 is in the extended position as shown in Figure 3, the lower portion 220 of the display assembly is positioned out of the cavity 218 such that both the lower portion 220 and the upper portion 222 of the display screen 204 are viewable.

The sliding display assembly 202 may in at least some examples enable a compact size for the handheld electronic communication device 100 when the display assembly is retracted while providing a larger viewable display screen area when the display assembly is extended. The keyboard 120 is exposed and fully accessible from a front of the handheld electronic communication device 100 when the display assembly 202 is in both the retracted and extended positions.

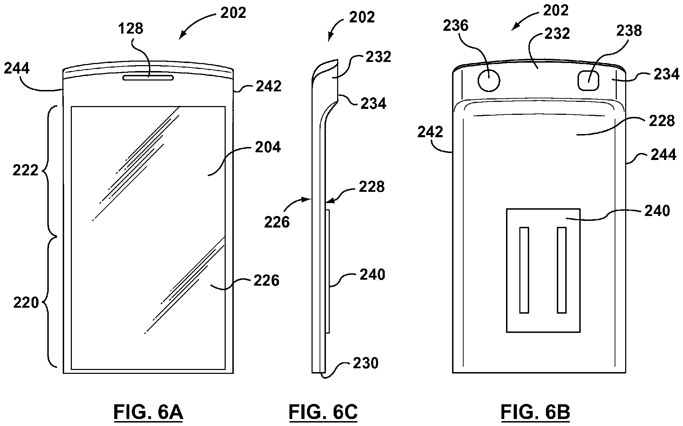

The housing 200 and the display assembly 202 may both house components of the handheld electronic communication device 100, including the components described and shown in FIG. 1. Referring to Figures 6A-6C, an example of the display assembly 202 will now be explained in greater detail. The display assembly 202 has a first or lower terminal end 230 that is received within the housing cavity 218 at least when the display assembly 202 is in the retracted position, and a second or upper terminal end 232 at its opposite end. The display assembly 202 has a substantially planar front face 226 which includes a viewable surface of the display screen 204, an opposite facing back face 228 and longitudinal side edges 242 and 244. The back face 228 is substantially planar over most of the length of the display assembly 202, however the upper terminal end 232 defines an enlarged boss portion 234 that has a back face that is spaced further back from the display assembly front face 226 than the rest of the back face 228.

In example embodiments, image capture device 125 includes an image sensor 236. As can be seen in the retracted position back view of Figure 4B, in some examples, the base 210 houses image sensor 236 such that the image sensor 236 faces outward from the back face of the base 210 for capturing one or both of photo or video image data. A flash or illuminator 238 may also be housed in the base 210 for illuminating objects that are the subject of image capture by the image sensor 236.The image capture device 125 may include one or more sub-processors for processing image data received through the image sensor 236.

In other examples, as illustrated in Figures 6B, the enlarged boss portion 234 houses the image sensor 236 and the optional illuminator 238. In this regard, figure 12 illustrates a back view of an example of handheld electronic communication device 100 where the back of housing 200 defines an opening 290 that exposes the image sensor 236 and illuminator 238 when the display assembly 202 is in its retracted position. The opening 290, which for example could be provided by omitting all or a portion of the cross member 278, facilitates the taking of picture and video when the display assembly 202 is in the retracted position.

The image sensor 236 is a device that captures optical images and converts them to an electrical signal in the form of image data. The image sensor 236 may comprise a charge-coupled device (CCD), a complementary metal-oxide semiconductor (CMOS) sensor, or any other sensor capable of capturing optical images.

Referring again to Figures 6A to 6C, in the illustrated example, device speaker 128 is housed in the enlarged boss portion 234 at the upper end 232 of the display assembly 202, and is oriented to output sound from the upper end 232 of the front face 226. In some examples, a sliding assembly member 240 is provided on the back face 228 of the display assembly 202 for sildably mounting the display assembly to a front face of the housing base 210.

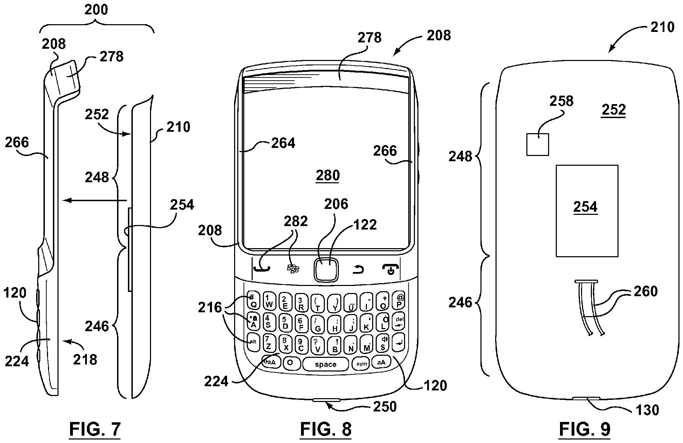

Referring to Figures 7-9, an example of the housing 200 will now be explained in greater detail. As noted above, the housing 200 includes a base 210 and a keyboard support member 224. In one example, the keyboard support member 224 is part of a front housing unit 208. As shown in Figures 7 and 9, base 210 has substantially planar front face 252 with a first or lower section 246 and a second or upper section 248. The front face of the base lower section 246 is arranged in spaced opposition to the keyboard support member 224 to form cavity 218, and the base upper section 248 extends from the first section 246 beyond the open end of the cavity 218. The front face of upper section 248 faces the back face 228 of the display assembly 202. In some examples of handheld communication device 100, many of the components of the device shown in Figure 1 are located within the base 210 including for example the main processor 102, RAM 108, memory 110, and communication subsystems 104 and 132. In one example, microphone 130 is located at a lower end of the base as illustrated in Figure 9. An opening or slot 250 (see Figure 8) may be provided in a lower end of the front housing unit 208 in alignment with the microphone 130. One or more antennas of one or both of the communications subsystem 104 and 132 may also be positioned at or near the lower end of the base 210. In some example embodiments, one or more data ports 126 and auxiliary I/O interfaces 124 can be provided on side edges of the base 210. For example, as seen in Figure 4D, a data port 126 in the form of a USB port and an I/O interface 124 in the form of an audio/microphone jack are provided on a side edge of the upper section of base 210. As seen in Figure 4C, physical user input buttons such as volume control buttons 253 that are operatively connected to the processor 102 can also be located on side edges of the base 210.

Referring again to Figure 9, a slider assembly member 254 can be provided on the front face 252 of the base 210. The slider assembly member 254 of the base 210 cooperates with the slider assembly member 240 of the sliding display assembly 202 to collectively provide a sliding assembly 256 (Figure 10) that slidably connects the display assembly 202 to the base 210. Any different number of known sliding assembly configurations could be used to implement sliding assembly 256, including but not limited to slider assemblies that incorporate one or both of springs and or electric motors to assist in moving the sliding component and retaining the sliding component in a desired position. In at least some examples a flex connector 260 extends between the base 210 and the sliding assembly 256 to provide an electrical link between components housed within the display assembly 202 and components housed within the base 210. In some example configurations, other communications links could be provided between base components and display assembly components, including for example optical or RF links.

One or more position sensors 258 can be provided on the base 210 or the display assembly 202 for detecting the position of the display assembly 202 relative to the housing 200. For example, a Hall effect sensor may be utilized to detect a position or positions of the display assembly 202 relative to the housing 200. According to another example, a mechanical switch or switches are used.

With reference to Figures 7 and 8, the keyboard support member 224 forms a lower portion of front housing unit 208 and supports keyboard 120. In one example, keyboard 120 includes a plurality of depressible alphanumeric keys 216 which may be arranged in rows and columns with a standard keyboard layout (e.g. QWERT, DVORAK, etc.). In some examples, the keyboard 120 may include a respective dome switch associated with each of the keys 216, however many different keyboard configurations could be used to implement keyboard 120.

In one example embodiment, a number of function keys 282 and a navigation device 122 are provided in a row along on the keyboard support member 120 between the keyboard 120 and the display screen. Function keys 282 are operatively connected to the processor 102 to initiate predetermined device functions such as initiate a phone call, terminate a phone call, and return to previous screen, among other things. The navigation device 122 responds to user interaction and can be used for navigating around the display screen 204, to select objects on the display screen 204 and for other purposes. The navigation device 122 can act as a cursor navigational tool and in some examples, the navigation device 122 can consist of an optically based user input device such as an optical joystick that uses an optical sensor pad 206 to detect relative movements of a finger. The optically based navigation device 122 can be used to instruct two-dimensional screen cursor movement in substantially any direction, as well as act as an actuator when the optically based navigation device 122 is depressed like a button. In some examples, where an optical sensor pad is used to implement navigation devicel22, the optical sensor pad has a low profile so that it is generally flush with the front of the keyboard support member 224 and does not protrude extensively behind the keyboard support member. In some examples, navigation device 122 could alternatively be a trackball, touchpad, physical joystick, directional keys or key pad.

In an example, the front housing unit 208 includes opposed first and second sidewalls 264 and 266 that extend from the keyboard support member 224 along respective axial side edges of the upper section 248 of base 210. At the upper end of the housing unit, the sidewalls 264 and 266 are connected by a cross member 278. The cross member 278, sidewalls 264 and 266 and keyboard support member 224 collectively define a rectangular opening 280 through which the display assembly 202 can be viewed. Referring to the sectional view of Figure 11, in one example sidewalls 264 and 266 each protrude away from the front face 252 of base 210 so that the screen assembly 202 is located between the sidewalls 264 and 266. As can be seen in Figure 4A, when the screen assembly 202 is in its retracted position, the upper portion 222 of the display screen 204 is located between sidewalls 264 and 266 with the side edges of the screen assembly 202 concealed by sidewalls 264 and 266. In the extended position, as seen in Figure 5A, at least part of the upper portion 222 of the display screen extends beyond the upper ends of the sidewalls 264.

Referring again to the sectional view of Figure 11, in one example, an outer surface of the sidewall 266 together with an outer side edge surface 281 of the base 210 forms one side edge of the communication device 100 and an outer surface of the sidewall 264 together with an outer side edge surface 284 of the base 210 forms an opposite side edge of the communication device 100. In one example, along the sides of rectangular opening 280 (Figure 8) the terminal edges 286, 288 of the sidewalls 264, 266 that face away from the front surface 252 of the base 210 are located in plane that is slightly higher than a front viewing surface of the display screen 204. In another example, along the sides of rectangular opening 280 the terminal edges 286, 288 of the sidewalls 264, 266 that face away from the front surface 252 of the base 210 are located in plane that is substantially flush with a front viewing surface of the display screen 204.

Referring again to Figures 7, 8 and 10, in one example the cross member 278 that extends between the upper ends of the sidewalls 264, 266 is offset back towards the base 210 relative to the sidewalls 264, 266 such that the cross member 278 is located behind the back face of the enlarged boss portion 234 of the upper end 232 of the display assembly 202. In such an example, the cross member 278 forms the upper terminal end of the housing 200 and provides a recess in the housing 200 for receiving the enlarged display assembly boss portion 234 when the display assembly is in its retracted position. As seen in Figure 4C and 4B, when the display assembly 202 is in its retracted position its upper end 232 is coterminous with the upper end of the housing 200 such that the housing 200 covers substantially the entire back surface of the display assembly 202.

In one example, the sidewalls 264, 268 protect the side edges of the display assembly 202 when the display assembly is in its retracted position, and also provide opposed surfaces for gripping the handheld electronic communication device 100 between the palm and fingers of a hand without interfering with movement of the display assembly. In one embodiment the sidewalls 264, 268 are respectively spaced apart such that a user can grip one side edge of the communication device 100 with fingers of a hand, grip the opposite side edge with the palm of the same hand and have the thumb free to either extend or retract the display assembly 202 or actuate the navigation device 122.

As indicated above the communication device 100 may include one or more sensors 258 that indicate one or more relative positions of the display assembly 200 to the processor 102. In examples the processor 102 is configured to modify operational characteristics of the display screen 204 in dependence on the sensed position of display assembly 200. By way of example, where the display screen 204 is an OLED (organic light emitting diode) display having pixels that can be selectively illuminated, when the processor 102 detects that the display assembly 204 is retracted the processor 102 can disable the illumination of pixels that are in the portion of the display screen 204 that is received within recess 218, while still enabling illumination the pixels of upper display screen portion 222. Such a feature may allow power conservation.

The operation of a handheld communication device 100 to capture and store image data will now be described in greater detail according to example embodiments. In an example embodiment, the operation and functionality of the image capture device 125 and its associated image sensor 236 is controlled by processor 102 operating under instructions from a camera application 148-1 that is included among software programs 148. In example embodiments, the camera application 148-1 enables the handheld electronic device 100 to operate in an image capturing mode or camera mode in which image data received through the image sensor 236 is displayed on display screen 204 and, upon occurrence of a image capture trigger, an image file derived from the received image data is created and stored as an image file in persistent memory such as memory 110 or a memory card inserted into a memory card interface of the handheld electronic device 100.

By way of example, the handheld electronic device 100 may be configured to enter a camera mode when a predetermined user input is received such as user selection of a physical camera mode enabling button (for example one of side edge buttons 253) or a predetermined soft button or icon is selected on display screen 204. Once in camera mode, real time-image data as received through the image sensor 236 is continually displayed on the display screen 204 so that the user can preview or observe in real-time an image that represents the image data being received by image sensor 204. Upon occurrence of an image capture trigger, the image data received through the image sensor 236 at the time that the image capture trigger occurs is captured, processed and stored as an image file on the handheld communications device 100. The image data stored in the image file may be an encoded, compressed or otherwise processed version of the image data received by the image sensor 236. In various examples, the stored image file may be, among other things, a TIF, JPG, PNG or GIF file. The image data may also be stored in a raw image format to minimize processing and to preserve image fidelity. The image capture trigger could for example include a predetermined user input - for example activation of navigation device 122 or pressing of a predetermined side edge button 253, or user selection of a predetermined soft button or icon on display screen 204. In some cases the image capture trigger could include a predetermined user input followed by a predetermined delay.

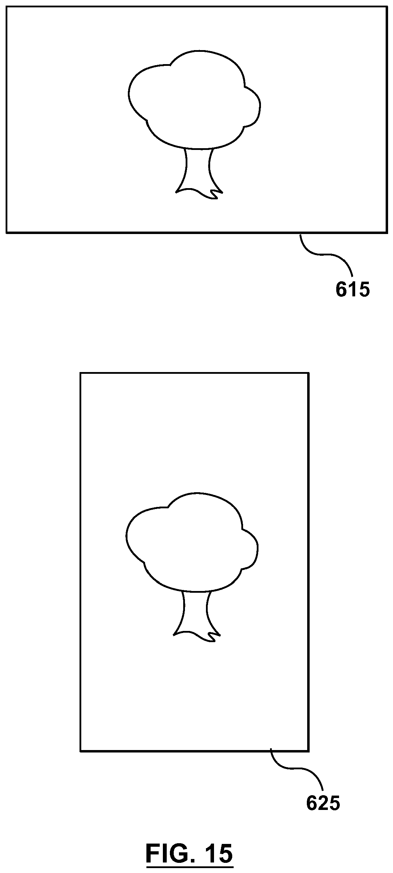

As known, captured images such as pictures often are displayed in a rectangular format having height and a width, with the height generally corresponding to the vertical orientation of the captured image. Captured images in which the height is greater than the width are commonly referred to as having a "portrait" orientation, and captured images in which the width is greater than the height are commonly referred to as having a "landscape" orientation. In this regard, Figure 15 illustrates representative rectangular images 615, 625 that show a tree, with image 615 having a landscape orientation and image 625 having a portrait orientation. Image data files can include orientation information that identifies an orientation of the image data so that a display device will display the resulting image with the correct orientation.

Example embodiments are described herein in which the handheld electronic device 100 is configured to selectively capture image data in a landscape or portrait orientation not only in dependence on the orientation of the handheld electronic device 100 but also in dependence on whether the display screen 204 is in its extended or retracted position.

Figures 13A to 13F which illustrate six possible orientation and display screen position combinations that correspond to six different image capture modes for a handheld electronic device 100 having a sliding display screen 204, with line V representing the vertical. Figures 13A and 13D show the handheld electronic device vertically orientated with the display screen 204 retracted and extended, respectively. Figures 13B and 13E show the handheld electronic device horizontally oriented, left side edge up, with the display screen 204 retracted and extended, respectively. Figures 13C and 13F show the handheld electronic device horizontally oriented, right side edge up, with the display screen 204 retracted and extended, respectively.

The combination of a vertical orientation and retracted display screen 204 shown in Figure 13A provides the visible display screen portion with a width X that is greater than its height Y, such that from a user's perspective the intuitive picture orientation for an image captured while the device is in the vertical orientation retracted display screen position of Figure 13A would be a landscape orientation. The combination of a vertical orientation and extended display screen shown in Figure 13D provides the visible display screen portion with a height Y that is greater than its width X, such that from a user's perspective the intuitive picture orientation for an image captured while the device is in the position of Figure 13D would be a portrait orientation. The combination of a horizontal orientation and retracted display screen shown in Figures 13B and 13C provides the visible display screen portion with a height Y that is greater than its width X, such that from a user's perspective the intuitive picture orientation for an image captured while the device is in the position of Figures 13B or 13C would be a portrait orientation. The combination of a horizontal orientation and extended display screen shown in Figures 13E and 13F provides the visible display screen portion with a width X that is greater than its height Y, such that from a user's perspective the intuitive picture orientation for an image captured while the device is in the position of Figures 13E or 13F would be a landscape orientation.

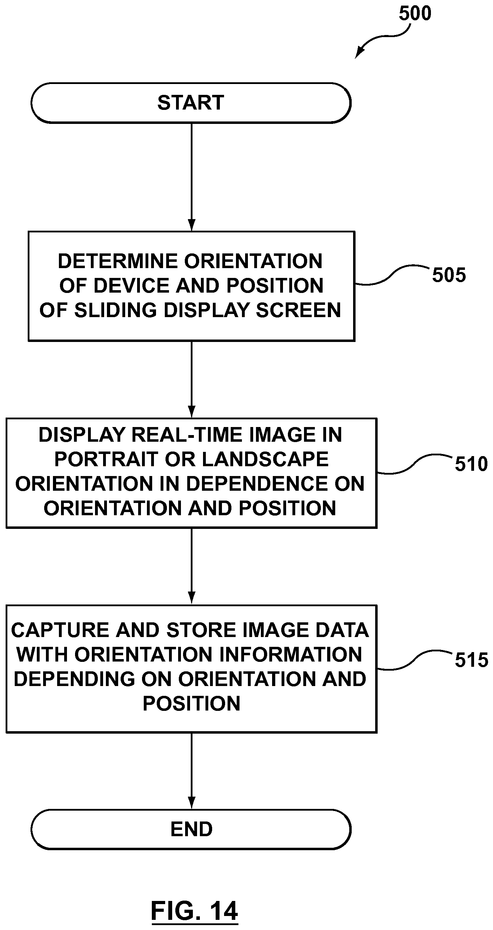

Referring to Figure 14, an example method 500 of receiving and capturing image data through image sensor 236 on a handheld electronic device 100 having a sliding display assembly will now be explained in greater detail. In an example embodiment, the method 500 commences once the handheld electronic device 100 enters a camera mode in the manner described above. As indicated in action 505, while in camera mode the processor 102 is configured to continuously monitor the orientation of the handheld electronic device 100 and the position of the sliding display screen 204. In example embodiments, the device orientation is determined based on device orientation information from an orientation sensor such as accelerometer 136. In one example, the processor 102 can determine the orientation of the device 100 by interpreting the direction of gravitational forces sensed by the accelerometer 136 with respect to the device 100.

In example embodiments, the processor 102 determines the position of the display assembly 202 (and display screen 204) relative to the housing 200 from display assembly or display screen position information from the one or more position sensors 258. The processor is configured to determine whether the display screen 204 is in a retracted position as illustrated in FIGS. 13A-C, or an extended position as illustrated in FIGS. 13D-F.

During use, the handheld electronic device 100 will often be positioned at angles that are not perfectly vertical or horizontal directions and accordingly in example embodiments a device orientation corresponding to one of the orientations shown in Figures 13A to 13F is determined based on the sensed orientation having characteristics that indicate which of the positions shown in Figures 13A to 13F the handheld electronic device approximates or is closest to being in. By way of non-limiting example, when the handheld electronic device is in the vertical orientation of Figure 13A, rotating the device by a threshold amount or more (for example 30 degrees to the horizontal) towards the horizontal position in Figure 13C will result in the device determining that it is in the horizontal orientation of Figure 13C, resulting in a shift from a portrait image orientation to a landscape image orientation when the threshold is reached. Similarly, when the handheld electronic device is in the horizontal orientation of Figure 13C, rotating the device by a threshold amount or more (for example 60 degrees to the vertical) towards the vertical position in Figure 13A will result in the device determining that it is in the vertical orientation of Figure 13A, resulting in a shift from a landscape image orientation to a portrait image orientation. Accordingly, in some example embodiments a change in orientation is detected when the device orientation changes a threshold amount from a current position. Different thresholds could be applied for determining the shift to different orientations.

As indicated in action 510, a real-time image representing the image data received by the image sensor 236 is displayed on the display screen 204 in either a landscape or portrait orientation in dependence on the currently sensed orientation and display screen position. In particular, based on the sensed orientation and display screen position information, the processor 102 determines which one of the six possible orientation and display screen position combinations shown in Figures 13A-13F the handheld electronic device 100 is currently in and then displays information on the display screen 204 according to a corresponding image capture mode. By way of example, Figure 13A corresponds to a vertical device orientation, display screen retracted mode, and based on thus real-time image data from the image sensor 236 is shown on the display screen 204 in a landscape orientation. In some examples, a rectangular onscreen indicator such as rectangular box 402 is displayed on the display screen 204 to provide a visual indication that the image data is displayed in a landscape or portrait orientation (landscape orientation being indicated by indicator 402 in Figure 13A). In some embodiments, the onscreen indicator box 402 may only appear overlaying image data momentarily when pre-image capture trigger occurs such as initial user selection of camera button on the device. In some embodiments the onscreen indicator box 402 may be an outer border that frames the image data to provide a visual indication of what image data will be stored in a corresponding image file when a image capture trigger occurs.

Figure 13B corresponds to a horizontal/left edge vertical device orientation, display screen retracted mode, and based on that real-time image data from the image sensor 236 is shown on the display screen 204 in a portrait orientation. Similarly, Figure 13C corresponds to a horizontal/right edge vertical device orientation, display screen retracted mode, and based on that real-time image data from the image sensor 236 is shown on the display screen 204 in a portrait orientation.

Figure 13D corresponds to a vertical device orientation, display screen extended mode, and based on that real-time image data from the image sensor 236 is shown on the display screen 204 in a portrait orientation. Figure 13E corresponds to a horizontal/left edge vertical device orientation, display screen extended mode, and based on that real-time image data from the image sensor 236 is shown on the display screen 204 in a landscape orientation. Similarly, Figure 13F corresponds to a horizontal/right edge vertical device orientation, display screen extended mode, and based on that real-time image data from the image sensor 236 is shown on the display screen 204 in a landscape orientation.

In some examples, status or other information can be presented on the display screen 204 in camera mode- for example, in Figures 13A to 13F, on onscreen symbol shown as an "F" 404 indicates that the flash or illuminator 238 is enabled. The display orientation of this status or other information may also be selected based on the sensed orientation of the handheld electronic device 100.

In the vertical device orientation, retracted display screen mode of Figure 13A and the vertical device orientation, extended display screen mode of Figure 13D the orientation of image sensor 236 remains the same for capturing, respectively, landscape oriented images and portrait oriented images. Similarly, in the horizontal device orientations of Figures 13B, 13C, 13E and 13F the orientation of image sensor 236 remains the same for capturing landscape oriented images and portrait oriented images. Accordingly, in order to maintain the correct aspect ratio and resolution between different image capture modes, in some example embodiments, different subsets of pixel data received from the image sensor may be selected for display on the display screen 204 and for image data capture and storage in dependence on the image capture mode.

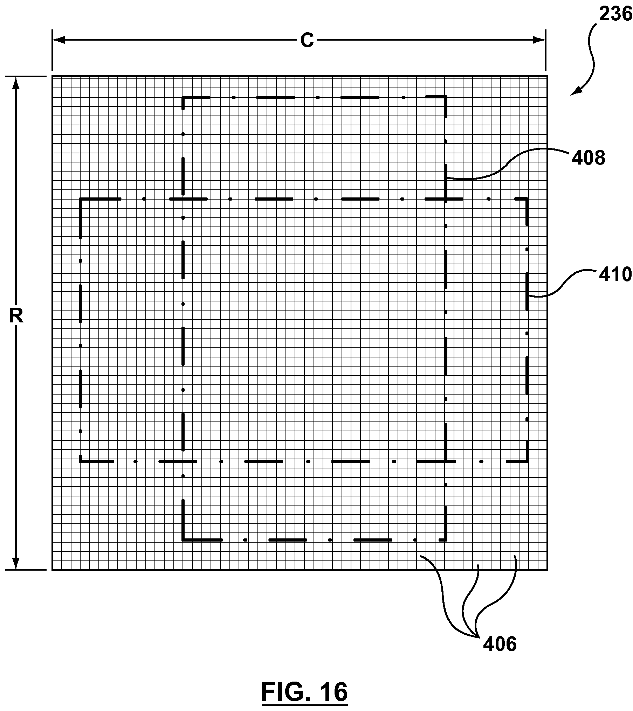

By way of example, Figure 16 represents the columns "C" and rows "R" of pixels 406 that the image sensor 236 is capable of capturing. When in the vertical device orientation, retracted display screen capture mode of Figure 13A, the landscape image displayed on display screen 204 corresponds to data received from pixel subset 410, whereas in the vertical device orientation, extended display screen capture mode of Figure 13D, the portrait image displayed on display screen 204 corresponds to data received from pixel subset 408. Similarly in the horizontal device orientation, retracted screen modes of Figures 13B and 13C, the portrait image displayed on display screen 204 corresponds to data received from pixel subset 410, and in the horizontal device orientation, extended display screen modes of Figures 13E and 13F, the landscape image on displayed on display screen 204 corresponds to data received from pixel subset 408.

Turning again to Figure 14, as indicted at action 515, when a predetermined image capture trigger occurs (for example a predetermined user input action occurs), image data received through the image sensor 236 is captured, processed and stored as an image file with image orientation information depending on the device orientation and the display screen position. In particular, the image file includes image orientation information for the captured image that corresponds to the image capture mode the mobile electronic device was in at the time that the image data was captured. The image orientation information includes information required to permit the image represented by the image data in the image file to be subsequently automatically displayed by a viewing device (which could for example be handheld electronic device 100 or another viewing device or medium) in the landscape or portrait orientation with the correct vertical orientation that corresponds to the orientation in which the subject image was originally captured. Thus, the image orientation information identifies an intended display orientation for the image represented by the stored image data. For example, the image file stored for each of the three image capture modes represented in Figures 13A, 13E and 13F will include orientation information such that a display device reading the image file can automatically display the image in the correct landscape orientation 615 as shown in Figure 15. Similarly, the image file stored for each of the three image capture modes represented in Figures 13D, 13B and 13C will include image orientation information such that a display device reading the image file can automatically display the image in the correct portrait orientation 625 as shown in Figure 15.

Image file formats typically include a representation of pixel information to allow an image to be replicated at a pixel level. In some example embodiments, the format of the pixel data contained in an image file can inherently include orientation information - for example the pixel data may be represented as rows and columns with a top of the image starting at the top of the array, with a greater number of columns than rows identifying a landscape orientation and a greater number of rows than columns identifying a portrait orientation. In such examples, the processor 102 is configured to rotate and store the image data received through sensor 236 in the correct orientation in the resulting data file. In some example embodiments, the orientation may not be inherent in the pixel data format and instead orientation information may be included by the processor 102 as metadata or a tag or header information stored with the pixel data in an image file, with the orientation information identifying if the image is landscape or portrait and the top of the image. In some examples a combination of the pixel data format and accompanying information may be used to identify the orientation of the image data.

In the example illustrated on Figures 13A to 13F, six different orientation and display screen position combinations corresponding to six different image capture modes are illustrated. In other example embodiments, more or fewer that six image capture modes are possible. For example, in some embodiments the handheld electronic device 100 could be configured to always shoot in a portrait orientation when device is vertically oriented regardless of whether the screen position was extended or retracted, but to still toggle between portrait and landscape orientation when the device was horizontal and the display screen moved between retracted and extended positions.

In some examples, the processor 102 may be configured to change the resolution, angle, focus or dimensions of the image data captured by the image sensor 236 based on the orientation of the device and the position of the display screen. For example, when the device is in a horizontal orientation and the screen is extended as shown in Figure 13E and 13F, the processor 102 may be configured to capture and store a wider-angle landscape image than is captured and stored when the device is in the vertical orientation/retracted screen position of Figure 13A.

While the examples described above have been directed at capturing and storing images, they could equally apply to devices and methods for capturing video on a handheld electronic device having a sliding display. The examples could also be applied to other forms of portable electronic devices having movable screens, including portable electronic devices having rotating or pivoting display screens in which the screen is partially hidden in a first position (for example a retracted position) and fully exposed in a second position (for example an extended position).

In some example embodiments, rather than or in addition to storing the image files with image orientation information at persistent memory 110 or a memory card inserted into the handheld electronic device 100, the processor 102 may cause the image files with image orientation information to be remotely stored by sending the image file to a remote storage location over communication subsystem 104 or sort-range communications subsystem 132.

In some examples processor 102 can comprise multiple coordinated processors.

While the present disclosure is described primarily in terms of methods, the present disclosure is also directed to a portable electronic device configured to perform at least part of the methods. The portable electronic device may be configured using hardware modules, software modules, a combination of hardware and software modules, or any other suitable manner. The present disclosure is also directed to a pre-recorded storage device or computer-readable medium having computer-readable code stored thereon, the computer-readable code being executable by at least one processor of the portable electronic device for performing at least parts of the described methods.

While the examples described herein are directed to particular implementations of the handheld electronic communication device it will be understood that modifications and variations may occur to those skilled in the art having had the benefit of this disclosure.

## Claims

1. A handheld electronic device (100) comprising:
a housing (200);
a display assembly (202) movably mounted to the housing (200) and comprising a display screen (204) on a front face thereof, the display assembly being movable between a first position and a second position, wherein in the first position a first portion (220) of the display screen (204) is hidden from view by the housing (200) and a second portion (222) of the display screen (204) is viewable, and in the second position the first portion (220) and the second portion (222) of the display screen (204) are both viewable;
an image sensor (236) on at least one of the housing (200) or the display assembly (202) for receiving image data representing an image;
a processor (102) configured to control operation of the display screen (204) and image sensor (236);
at least one position sensor (258) for providing display screen position information to the processor (102) indicating if the display assembly (202) is in the first position or the second position; and
an orientation sensor (136) for providing device orientation information to the processor (102) indicating whether the handheld electronic device (100) is in a vertical orientation or in a horizontal orientation;
the processor (102) being configured to store image data from the image sensor representing the image in an image file with image orientation information identifying a display orientation for the image, the image orientation information being determined in dependence on both the display screen position information and the device orientation information,
wherein the image orientation information identifies either a portrait orientation or a landscape orientation.

2. The handheld electronic device of claim 1 wherein the image data stored in the image file includes pixel data and the image orientation information is represented in the format of the pixel data.

3. The handheld electronic device of claim 2 wherein the processor is configured to rotate the pixel data for storage in the image file in dependence on both the display screen position information and the device orientation information.

4. The handheld device of claim 1 wherein the image file includes the image orientation information as metadata.

5. The handheld electronic device of any one of claims 1-4 wherein the processor is configured such that:
if the device orientation information and display screen position information indicate that the handheld electronic device is in a vertically oriented position with the display assembly in the second position, the image orientation information identifies the portrait orientation;
if the device orientation information and display screen position information indicate that the handheld electronic device is in the vertically oriented position with the display assembly in the first position, the image orientation information identifies the landscape orientation;
if the device orientation information and display screen position information indicate that the handheld electronic device is in a horizontally oriented position with the display assembly in the second position, the image orientation information identifies the landscape orientation; and
if the device orientation information and display screen position information indicate that the handheld electronic device is in the horizontally oriented position with the display assembly in the first position, the image orientation information identifies the portrait orientation.

6. The handheld electronic device of any one of claims 1 to 5 wherein the image sensor senses rows and columns of pixels, wherein the image data is derived from different subsets of pixels in dependence on both the display screen position information and the device orientation information.

7. The handheld electronic device of any one of claims 1 to 6 wherein the processor is configured to display a real-time image on the display screen representing the image data received through the image sensor, wherein the real-time image is selectively displayed in either the landscape orientation or the portrait orientation depending on both the display screen position information and the device orientation information.

8. The handheld electronic device of claim 7 wherein the processor is configured to display an on-screen indicator with the real-time image to indicate if the real-time image is displayed in the landscape orientation or the portrait orientation.

9. The handheld electronic device of claim 7 or 8 wherein the processor is configured such that:
if the device orientation information and display screen position information indicate that the handheld electronic device is in the horizontally oriented position with the display assembly in the second position, the real-time image is displayed in the landscape orientation; and
if the device orientation information and display screen position information indicate that the handheld electronic device is in the horizontally oriented position with the display assembly in the first position, the real-time image is displayed in the portrait orientation.

10. A method of capturing image data using a handheld electronic device (100) having a movable display screen (204), the movable display screen (204) being movable between a first position and a second position, wherein in the first position a first portion (220) of the display screen is hidden from view and a second portion (222) of the display screen is viewable, and in the second position the first portion (220) and the second portion (222) of the display screen are viewable, the handheld electronic device (100) having an image sensor (236), an orientation sensor (136) for tensing a vertical or horizontal orientation of the handheld electronic device, and at least one position sensor (258) for sensing a position of the display screen, comprising:
receiving device orientation information from the orientation sensor and display screen position information from the position sensor;
receiving image data from the image sensor representing an image; and
determining an image orientation for the image in dependence on both the display screen position information and the device orientation information,
wherein the image orientation represents either a portrait orientation or a landscape orientation.

11. The method of claim 10 comprising storing an image file representing the image, the image file identifying the determined image orientation, wherein the image orientation represents an intended display orientation for the image.

12. The method of claim 11 wherein the image is represented with pixel data and the pixel data is formatted in the image file in dependence on the determined image orientation.

13. The method of any one of claims 10 to 12 wherein determining the image orientation includes:
if the device orientation information and display screen position information indicate that the handheld electronic device is in a vertically oriented position with the display screen in the second position, determining that the image orientation is the portrait orientation;
if the device orientation information and display screen position information indicate that the handheld electronic device is in the vertically oriented position with the display screen in the first position, determining that the image orientation is the landscape orientation;
if the device orientation information and display screen position information indicate that the handheld electronic device is in a horizontally oriented position with the display screen in the second position, determining that the image orientation is the landscape orientation; and
if the device orientation information and display screen position information indicate that the handheld electronic device is in the horizontally oriented position with the display assembly in the second position, determining that the image orientation is the portrait orientation.

14. A computer program product comprising a computer readable medium having stored thereon computer code for causing a handheld electronic device to carry out the method of any one of claims 10 to 13.

## Patentansprüche

1. Handelektronikvorrichtung (100) mit:
einem Gehäuse (200),
einer Anzeigebaugruppe (202), die beweglich an dem Gehäuse (200) befestigt ist und einen Anzeigebildschirm (204) auf der Vorderseite davon aufweist, wobei die Anzeigebaugruppe zwischen einer ersten Position und einer zweiten Position beweglich ist, wobei in der ersten Position ein erster Teil (220) des Anzeigebildschirms (204) durch das Gehäuse (200) sichtgeschützt ist und ein zweiter Teil (222) des Anzeigebildschirms (204) sichtbar ist, und in der zweiten Position der erste Teil (220) und der zweite Teil (222) des Anzeigebildschirms (204) beide sichtbar sind,
einem Bildsensor (236) an mindestens einem von dem Gehäuse (200) oder der Anzeigebaugruppe (202) zum Empfangen von Bilddaten, die ein Bild darstellen,
einem Prozessor (102), der dazu konfiguriert ist, einen Betrieb des Anzeigebildschirms (204) und des Bildsensors (236) zu steuern,
mindestens einem Positionssensor (258) zum Liefern von Anzeigebildschirmpositionsinformation an den Prozessor (102), die angibt, ob sich die Anzeigebaugruppe (202) in der ersten Position oder in der zweiten Position befindet, und
einem Ausrichtungssensor (136) zum Liefern von Vorrichtungsausrichtungsinformation an den Prozessor (102), die angibt, ob sich die Handelektronikvorrichtung (100) in einer vertikalen Ausrichtung oder in einer horizontalen Ausrichtung befindet,
wobei der Prozessor (102) dazu konfiguriert ist, Bilddaten von dem Bildsensor, die das Bild darstellen, in einer Bilddatei mit Bildausrichtungsinformation zu speichern, die eine Anzeigeausrichtung für das Bild identifizieren, wobei die Bildausrichtungsinformation in Abhängigkeit sowohl von der Anzeigebildschirmpositionsinformation als auch von der Vorrichtungsausrichtungsinformation bestimmt wird,
wobei die Bildausrichtungsinformation entweder eine Hochausrichtung oder eine Querausrichtung identifiziert.

2. Handelektronikvorrichtung nach Anspruch 1, wobei die Bilddaten, die in der Bilddatei gespeichert sind, Pixeldaten enthalten und die Bildausrichtungsinformation in dem Format von Pixeldaten dargestellt ist.

3. Handelektronikvorrichtung nach Anspruch 2, wobei der Prozessor dazu konfiguriert ist, die Pixeldaten zur Speicherung in der Bilddatei in Abhängigkeit sowohl von der Anzeigebildschirmpositionsinformation als auch von der Vorrichtungsausrichtungsinformation zu rotieren.

4. Handelektronikvorrichtung nach Anspruch 1, wobei die Bilddatei die Bildausrichtungsinformation als Metadaten enthält.

5. Handelektronikvorrichtung nach einem der Ansprüche 1 bis 4, wobei der Prozessor derart konfiguriert ist, dass:
wenn die Vorrichtungsausrichtungsinformation und die Anzeigebildschirmpositionsinformation angeben, dass sich die Handelektronikvorrichtung in einer vertikal ausgerichteten Position mit der Anzeigebaugruppe in der zweiten Position befindet, die Bildausrichtungsinformation die Hochausrichtung identifiziert,
wenn die Vorrichtungsausrichtungsinformation und die Anzeigebildschirmpositionsinformation angeben, dass sich die Handelektronikvorrichtung in der vertikal ausgerichteten Position mit der Anzeigebaugruppe in der ersten Position befindet, die Bildausrichtungsinformation die Querausrichtung identifiziert,
wenn die Vorrichtungsausrichtungsinformation und die Anzeigebildschirmpositionsinformation angeben, dass sich die Handelektronikvorrichtung in einer horizontal ausgerichteten Position mit der Anzeigebaugruppe in der zweiten Position befindet, die Bildausrichtungsinformation die Querausrichtung identifiziert,
wenn die Vorrichtungsausrichtungsinformation und die Anzeigebildschirmpositionsinformation angeben, dass sich die Handelektronikvorrichtung in der horizontal ausgerichteten Position mit der Anzeigebaugruppe in der ersten Position befindet, die Bildausrichtungsinformation die Hochausrichtung identifiziert.

6. Handelektronikvorrichtung nach einem der Ansprüche 1 bis 5, wobei der Bildsensor Reihen und Spalten von Pixeln erfasst, wobei die Bilddaten von verschiedenen Teilmengen von Pixeln sowohl in Abhängigkeit von der Anzeigebildschirmpositionsinformation als auch der Vorrichtungsausrichtungsinformation abgeleitet werden.

7. Handelektronikvorrichtung nach einem der Ansprüche 1 bis 6, wobei der Prozessor dazu konfiguriert ist, ein Echtzeitbild auf dem Anzeigebildschirm anzuzeigen, das bzw. der die Bilddaten darstellt, die durch den Bildsensor empfangen sind, wobei das Echtzeitbild sowohl von der Anzeigebildschirmpositionsinformation als auch von der Vorrichtungsausrichtungsinformation abhängig selektiv entweder in der Querausrichtung oder in der Hochausrichtung angezeigt wird.

8. Handelektronikvorrichtung nach Anspruch 7, wobei der Prozessor dazu konfiguriert ist, eine Bildschirmangabe mit dem Echtzeitbild anzuzeigen, um anzugeben, ob das Echtzeitbild in der Hochausrichtung oder in der Querausrichtung angezeigt wird.

9. Handelektronikvorrichtung nach Anspruch 7 oder 8, wobei der Prozessor derart konfiguriert, dass:
wenn die Vorrichtungsausrichtungsinformation und die Anzeigebildschirmpositionsinformation angeben, dass sich die Handelektronikvorrichtung in der horizontal ausgerichteten Position mit der Anzeigebaugruppe in der zweiten Position befindet, das Echtzeitbild in der Querausrichtung angezeigt wird,
wenn die Vorrichtungsausrichtungsinformation und die Anzeigebildschirmpositionsinformation angeben, dass sich die Handelektronikvorrichtung in der horizontal ausgerichteten Position mit der Anzeigebaugruppe in der ersten Position befindet, das Echtzeitbild in der Hochausrichtung angezeigt wird.

10. Verfahren zum Aufnehmen von Bilddaten unter Verwendung einer Handelektronikvorrichtung (100), die einen beweglichen Anzeigebildschirm (204) hat, wobei der bewegliche Anzeigebildschirm (204) zwischen einer ersten Position und einer zweiten Position beweglich ist, wobei in der ersten Position ein erster Teil (220) des Anzeigebildschirms sichtgeschützt ist und ein zweiter Teil (222) des Anzeigebildschirms sichtbar ist und in der zweiten Position der erste Teil (220) und der zweite Teil (222) des Anzeigebildschirms sichtbar sind, wobei die Handelektronikvorrichtung (100) einen Bildsensor (236), einen Ausrichtungssensor (136) zum Erfassen einer vertikalen oder einer horizontalen Ausrichtung der Handelektronikvorrichtung und mindestens einen Positionssensor (258) zum Erfassen einer Position des Anzeigebildschirms hat, mit:
Empfangen von Vorrichtungsausrichtungsinformation von dem Ausrichtungssensor und von Anzeigebildschirmpositionsinformation von dem Positionssensor,
Empfangen von Bilddaten von dem Bildsensor, die ein Bild darstellen, und
Bestimmen einer Bildausrichtung für das Bild in Abhängigkeit sowohl von dem der Anzeigebildschirmpositionsinformation als auch von der Vorrichtungsausrichtungsinformation,
wobei die Bildausrichtung entweder eine Hochausrichtung oder eine Querausrichtung darstellt.

11. Verfahren nach Anspruch 10 mit Speichern einer Bilddatei, die das Bild darstellt, wobei die Bilddatei die bestimmte Bildausrichtung identifiziert, wobei die Bildausrichtung eine vorgesehene Anzeigeausrichtung für das Bild darstellt.

12. Verfahren nach Anspruch 11, wobei das Bild mit Pixeldaten dargestellt wird und die Pixeldaten in Abhängigkeit von der bestimmten Bildausrichtung in der Bilddatei formatiert sind.

13. Verfahren nach einem der Ansprüche 10 bis 12, wobei das Bestimmen der Bildausrichtung Folgendes aufweist:
ein Bestimmen, wenn die Vorrichtungsausrichtungsinformation und die Anzeigebildschirmpositionsinformation angeben, dass sich die Handelektronikvorrichtung in einer vertikal ausgerichteten Position mit dem Anzeigebildschirm in der zweiten Position befindet, dass die Bildausrichtung die Hochausrichtung ist,
ein Bestimmen, wenn die Vorrichtungsausrichtungsinformation und die Anzeigebildschirmpositionsinformation angeben, dass sich die Handelektronikvorrichtung in der vertikal ausgerichteten Position mit dem Anzeigebildschirm in der ersten Position befindet, dass die Bildausrichtung die Querausrichtung ist,
ein Bestimmen, wenn die Vorrichtungsausrichtungsinformation und die Anzeigebildschirmpositionsinformation angeben, dass sich die Handelektronikvorrichtung in einer horizontal ausgerichteten Position mit dem Anzeigebildschirm in der zweiten Position befindet, dass die Bildausrichtung die Querausrichtung ist, und
ein Bestimmen, wenn die Vorrichtungsausrichtungsinformation und die Anzeigebildschirmpositionsinformation angeben, dass sich die Handelektronikvorrichtung in der horizontal ausgerichteten Position mit dem Anzeigebildschirm in der zweiten Position befindet, dass die Bildausrichtungsinformation die Hochausrichtung ist.

14. Computerprogrammprodukt mit einem computerlesbaren Medium, das darauf Computercode zum Veranlassen einer Handelektronikvorrichtung gespeichert hat, das Verfahren nach einem der Ansprüche 10 bis 13 durchzuführen.

## Revendications

1. Dispositif électronique portable (100) comprenant :
un logement (200) ;
un ensemble d'affichage (202) monté de manière mobile sur le logement (200) et comprenant un écran d'affichage (204) sur une face avant de celui-ci, l'ensemble d'affichage pouvant être déplacé entre une première position et une deuxième position, dans lequel, à la première position, une première partie (220) de l'écran d'affichage (204) est cachée à la vue par le logement (200) et une deuxième partie (222) de l'écran d'affichage (204) peut être vue, et, à la deuxième position, la première partie (220) et la deuxième partie (222) de l'écran d'affichage (204) peuvent toutes deux être vues ;
un capteur d'image (236) sur au moins l'un du logement (200) ou de l'ensemble d'affichage (202) pour recevoir des données d'image représentant une image ;
un processeur (102) configuré pour commander le fonctionnement de l'écran d'affichage (204) et du capteur d'image (236) ;
au moins un capteur de position (258) pour fournir des informations de position d'écran d'affichage au processeur (102) indiquant si l'ensemble d'affichage (202) est à la première position ou à la deuxième position ; et
un capteur d'orientation (136) pour fournir des informations d'orientation de dispositif au processeur (102) indiquant si le dispositif électronique portable (100) est dans une orientation verticale ou dans une orientation horizontale ;
le processeur (102) étant configuré pour mémoriser les données d'image provenant du capteur d'image représentant l'image dans un fichier d'image avec les informations d'orientation d'image identifiant une orientation d'affichage pour l'image, les informations d'orientation d'image étant déterminées en fonction à la fois des informations de position d'écran d'affichage et des informations d'orientation de dispositif,
dans lequel les informations d'orientation d'image identifient l'une ou l'autre d'une orientation de portrait ou d'une orientation de paysage.

2. Dispositif électronique portable selon la revendication 1, dans lequel les données d'image mémorisées dans le fichier d'image comprennent des données de pixel et les informations d'orientation d'image sont représentées dans le format des données de pixel.

3. Dispositif électronique portable selon la revendication 2, dans lequel le processeur est configuré pour faire tourner les données de pixel pour une mémorisation dans le fichier d'image en fonction à la fois des informations de position d'écran d'affichage et des informations d'orientation de dispositif.

4. Dispositif portable selon la revendication 1, dans lequel le fichier d'image comprend les informations d'orientation d'image en tant que métadonnées.

5. Dispositif électronique portable selon l'une quelconque des revendications 1 à 4, dans lequel le processeur est configuré de sorte que :
si les informations d'orientation de dispositif et les informations de position d'écran d'affichage indiquent que le dispositif électronique portable est dans une position d'orientation verticale avec l'ensemble d'affichage à la deuxième position, les informations d'orientation d'image identifient l'orientation de portrait ;
si les informations d'orientation de dispositif et les informations de position d'écran d'affichage indiquent que le dispositif électronique portable est dans la position d'orientation verticale avec l'ensemble d'affichage à la première position, les informations d'orientation d'image identifient l'orientation de paysage ;
si les informations d'orientation de dispositif et les informations de position d'écran d'affichage indiquent que le dispositif électronique portable est dans une position d'orientation horizontale avec l'ensemble d'affichage à la deuxième position, les informations d'orientation d'image identifient l'orientation de paysage ; et
si les informations d'orientation de dispositif et les informations de position d'écran d'affichage indiquent que le dispositif électronique portable est dans la position d'orientation horizontale avec l'ensemble d'affichage à la première position, les informations d'orientation d'image identifient l'orientation de portrait.

6. Dispositif électronique portable selon l'une quelconque des revendications 1 à 5, dans lequel le capteur d'image détecte les rangées et les colonnes de pixels, dans lequel les données d'image sont déduites de différents sous-ensembles de pixels en fonction à la fois des informations de position d'écran d'affichage et des informations d'orientation de dispositif.

7. Dispositif électronique portable selon l'une quelconque des revendications 1 à 6, dans lequel le processeur est configuré pour afficher une image en temps réel sur l'écran d'affichage représentant les données d'image reçues par l'intermédiaire du capteur d'image, dans lequel l'image en temps réel est affichée de manière sélective dans l'une ou l'autre de l'orientation de paysage ou de l'orientation de portrait en fonction à la fois des informations de position d'écran d'affichage et des informations d'orientation de dispositif.

8. Dispositif électronique portable selon la revendication 7, dans lequel le processeur est configuré pour afficher un indicateur sur l'écran avec l'image en temps réel pour indiquer si l'image en temps réel est affichée dans l'orientation de paysage ou dans l'orientation de portrait.

9. Dispositif électronique portable selon la revendication 7 ou 8, dans lequel le processeur est configuré de sorte que :
si les informations d'orientation de dispositif et les informations de position d'écran d'affichage indiquent que le dispositif électronique portable est dans la position d'orientation horizontale avec l'ensemble d'affichage à la deuxième position, l'image en temps réel est affichée dans l'orientation de paysage ; et
si les informations d'orientation de dispositif et les informations de position d'écran d'affichage indiquent que le dispositif électronique portable est dans la position d'orientation horizontale avec l'ensemble d'affichage à la première position, l'image en temps réel est affichée dans l'orientation de portrait.

10. Procédé de capture de données d'image en utilisant un dispositif électronique portable (100) comportant un écran d'affichage mobile (204), l'écran d'affichage mobile (204) pouvant être déplacé entre une première position et une deuxième position, dans lequel, à la première position, une première partie (220) de l'écran d'affichage est cachée à la vue et une deuxième partie (222) de l'écran d'affichage peut être vue, et, à la deuxième position, la première partie (220) et la deuxième partie (222) de l'écran d'affichage peuvent être vues, le dispositif électronique portable (100) comportant un capteur d'image (236), un capteur d'orientation (136) pour détecter une orientation verticale ou horizontale du dispositif électronique portable, et au moins un capteur de position (258) pour détecter une position de l'écran d'affichage, comprenant :
la réception d'informations d'orientation de dispositif du capteur d'orientation et d'informations de position d'écran d'affichage du capteur de position ;
la réception de données d'image du capteur d'image représentant une image ; et
la détermination d'une orientation d'image pour l'image en fonction à la fois des informations de position d'écran d'affichage et des informations d'orientation de dispositif,
dans lequel l'orientation d'image représente l'une ou l'autre d'une orientation de portrait ou d'une orientation de paysage.

11. Procédé selon la revendication 10, comprenant la mémorisation d'un fichier d'image représentant l'image, le fichier d'image identifiant l'orientation d'image déterminée, dans lequel l'orientation d'image représente une orientation d'affichage attendue pour l'image.

12. Procédé selon la revendication 11, dans lequel l'image est représentée avec des données de pixel et les données de pixel sont formatées dans le fichier d'image en fonction de l'orientation d'image déterminée.

13. Procédé selon l'une quelconque des revendications 10 à 12, dans lequel la détermination de l'orientation d'image comprend :
si les informations d'orientation de dispositif et les informations de position d'écran d'affichage indiquent que le dispositif électronique portable est dans une position d'orientation verticale avec l'écran d'affichage à la deuxième position, la détermination que l'orientation d'image est l'orientation de portrait ;
si les informations d'orientation de dispositif et les informations de position d'écran d'affichage indiquent que le dispositif électronique portable est dans la position d'orientation verticale avec l'écran d'affichage à la première position, la détermination que l'orientation d'image est l'orientation de paysage ;
si les informations d'orientation de dispositif et les informations de position d'écran d'affichage indiquent que le dispositif électronique portable est dans une position d'orientation horizontale avec l'écran d'affichage à la deuxième position, la détermination que l'orientation d'image est l'orientation de paysage ; et
si les informations d'orientation de dispositif et les informations de position d'écran d'affichage indiquent que le dispositif électronique portable est dans la position d'orientation horizontale avec l'ensemble d'affichage à la deuxième position, la détermination que l'orientation d'image est l'orientation de portrait.

14. Produit-programme d'ordinateur comprenant un support pouvant être lu par un ordinateur sur lequel est mémorisé un code informatique pour amener un dispositif électronique portable à mettre en oeuvre le procédé selon l'une quelconque des revendications 10 à 13.
